# EUROPEAN PATENT APPLICATION

(11) **EP 1 845 672 A2**
(43) Date of publication of application: **17.10.2007**
(21) Application number: 07105141.1
(22) Date of filing: 28.03.2007
(51) Int. Cl.: H04L 12/56, H04L 29/06

(54) **Method and apparatus for generating transport frame, and method and apparatus for processing transport frame**

(30) Priority: 10.04.2006 US 790554 P; 23.10.2006 KR 20060103141
(71) Applicant: SAMSUNG ELECTRONICS CO., LTD., Suwon-si Gyeonggi-do 442-742 (KR)
(72) Inventor: Park, Jeong-hoon, Gwanak-gu, Seoul (KR); Ryu, Ga-hyun, Yeongtong-gu, Suwon-si, Gyeonggi-do (KR); Cho, Kyung-sun, Gwangjiin-gu, Seoul (KR)
(74) Representative: Davies, Robert Ean

(57) **Abstract**

An apparatus and method for generating a transport frame, and an apparatus and method for processing a transport frame are provided. The method of generating a transport frame includes: selecting (S610) an operation mode of a sub-transport frame, which is a transmission unit of an input packetized frame; generating (S620) a sub-transport frame based on the operation mode; and generating (S630) a transport frame using the sub-transport frame, wherein the operation mode is distinguished according to whether the sub-transport frame includes stuffing data. Accordingly, a packetized frame can be efficiently transmitted by reducing stuffing overhead bits due to stuffing data and header data.

## Description

Methods and apparatuses consistent with the present invention relate to generating a transport frame, and more particularly, to generating a transport frame in order to efficiently transmit data by reducing stuffing overhead occurring when actual data is transmitted, and processing a transport frame.

The convergence of broadcasting services and communication services is enabling content providers, such as broadcasting stations, to provide broadcasting content via not only a broadcasting network but also the Internet. In addition, an Internet Protocol Television (IPTV) service provides an information service, video content, broadcasting, and so on through a TV set using ultra-high speed Internet.

Thus, more importance is now being placed on the ability to efficiently transmit various media constituting broadcasting content, such as video data, audio data, IP packets, text data, image data, and so on, via a broadcasting network or the Internet. An existing broadcasting transmission system uses an MPEG-2 transport stream (TS) having excellent performance in packet synchronization, loss prevention, and stream time synchronization when using a broadcasting network or the Internet. However, the MPEG-2 TS is a general standard for transmitting data and has a relatively large number of overhead bits.

Embodiments of the present invention aim to provide an apparatus and method for generating a transport frame in order to more efficiently transmit data by reducing stuffing overhead occurring when actual data is transmitted.

Embodiments of the present invention also aim to provide an apparatus and method for processing the generated transport frame.

According to an aspect of the present invention, there is provided a method of generating a transport frame used to transmit a packetized frame, the method comprising: selecting an operation mode of a sub-transport frame, which is a transmission unit of an input packetized frame; generating a sub-transport frame based on the operation mode; and generating a transport frame using at least one sub-transport frame, wherein the operation mode is distinguished according to whether the sub-transport frame includes stuffing data.

The sub-transport frame may comprise a header containing information on a configuration of the sub-transport frame and a payload containing the packetized frame.

The operation mode may be selected to efficiently transmit the packetized frame by minimizing stuffing overhead.

The operation mode may be predicted every time a sub-transport frame is generated.

The sub-transport frame may have a length of 47 bytes, 94 bytes, 141 bytes, or 188 bytes, depending on a length of the packetized frame.

The method may further comprise if the operation mode is a non-stuffing mode in which no stuffing data is included, generating a sub-transport frame by adding the first segment of a new packetized frame to the last segment of a current packetized frame.

The method may further comprise if the operation mode is the non-stuffing mode in which no stuffing data is included, indicating by setting a pointer field in the sub-transport frame that a new packetized frame comes next to the pointer field.

The method may further comprise: determining whether the generated sub-transport frame is optimized to transmit the packetized frame; and changing the operation mode of the sub-transport frame according to the determination result.

The generating of the transport frame using at least one sub-transport frame may comprise generating a transport frame having the same length as an MPEG-2 transport stream (TS) packet by adding a sync byte.

According to another aspect of the present invention, there is provided an apparatus for generating a transport frame used to transmit a packetized frame, the apparatus comprising: an operation mode selector which selects an operation mode of a sub-transport frame, which is a transmission unit of an input packetized frame; a sub-transport frame generator which generates a sub-transport frame based on the operation mode; and a transport frame generator which generates a transport frame using at least one sub-transport frame, wherein the operation mode is distinguished according to whether the sub-transport frame includes stuffing data.

According to another aspect of the present invention, there is provided a method of processing a transport frame, the method comprising: generating a transport frame from a received transport stream; detecting an operation mode of a sub-transport frame included in the transport frame; and generating a packetized frame by processing the sub-transport frame included in the transport frame according to the operation mode.

According to another aspect of the present invention, there is provided an apparatus for processing a transport frame, the apparatus comprising: a transport frame receiver which generates a transport frame from a received transport stream; an operation mode detector which detects an operation mode of a sub-transport frame included in the transport frame; and a sub-transport frame processing unit which generates a packetized frame by processing the sub-transport frame included in the transport frame according to the operation mode.

For a better understanding of the invention, and to show how embodiments of the same may be carried into effect, reference will now be made, by way of example, to the accompanying diagrammatic drawings in which:
FIG. 1 illustrates a structure of a sub-transport frame according to an exemplary embodiment of the present invention;
FIG. 2 is a diagram for describing a variable length sub-transport frame according to an exemplary embodiment of the present invention;
FIG. 3 illustrates an aligned frame and a non-aligned frame of a sub-transport frame according to an exemplary embodiment of the present invention;
FIG. 4 illustrates a high-level structure of a sub-transport frame according to an exemplary embodiment of the present invention;
FIG. 5 illustrates a header structure of a sub-transport frame according to an exemplary embodiment of the present invention;
FIG. 6 is a flowchart illustrating a method of generating a transport frame according to an exemplary embodiment of the present invention;
FIG. 7 is a block diagram of an apparatus for generating a transport frame according to an exemplary embodiment of the present invention;
FIG. 8 is a flowchart illustrating a method of processing a transport frame according to an exemplary embodiment of the present invention;
FIG. 9 is a block diagram of an apparatus for processing a transport frame according to an exemplary embodiment of the present invention; and
FIGS. 10A and 10B are graphs showing that stuffing overhead is reduced when an Internet Protocol (IP) packet is transmitted using a transport frame according to an exemplary embodiment of the present invention.

Hereinafter, the present invention will be described in detail by explaining exemplary embodiments of the invention with reference to the attached drawings.

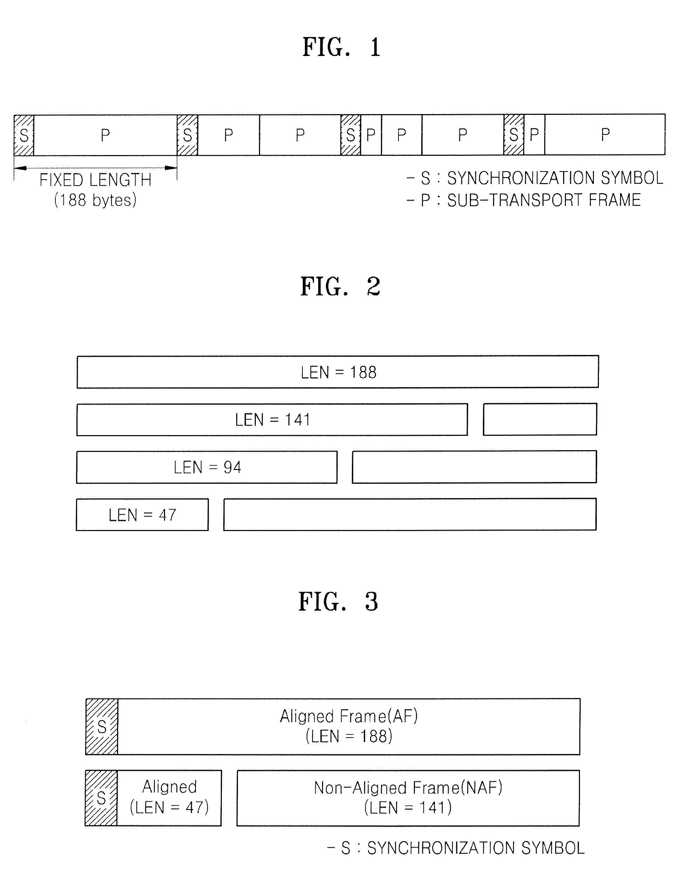

FIG. 1 illustrates a structure of a sub-transport frame according to an exemplary embodiment of the present invention.

Referring to FIG. 1, a transport frame according to an exemplary embodiment of the present invention has a sync byte in a header field and has a fixed frame length of 188 bytes. A sub-transport frame according to an exemplary embodiment of the present invention is a basic transmission unit of a transport frame and is used to transmit a packetized frame included in the transport frame. The sub-transport frame includes a payload containing the packetized frame and a header containing information on a configuration of the sub-transport frame.

The packetized frame is an accessible basic unit of a stream transmitted through a sub-transport frame according to an exemplary embodiment of the present invention. The packetized frame may be one of various types of data, such as an Internet Protocol (IP) packet or a single frame of audio or video.

A transport frame according to an exemplary embodiment of the present invention provides compatibility with the MPEG-2 packet length using an MPEG-2 Transport Stream (TS) synchronization symbol, i.e., a sync byte. Thus, a TS stream can be protected from errors by using an outer coding scheme of TS 102 427.

FIG. 2 is a diagram for describing a variable length sub-transport frame according to an exemplary embodiment of the present invention.

Referring to FIG. 2, a sub-transport frame according to the current exemplary embodiment may have one of four different frame modes, i.e., a length of 47 bytes, 94 bytes, 141 bytes, or 188 bytes. The length of a sub-transport frame is determined by the length of a packetized frame included in the sub-transport frame, in particular, the length of a last segment of the packetized frame.

The length of a last segment of a packetized frame is abbreviated to "LLS (Length of Last Segment)". According to the current exemplary embodiment, in the case of 141 bytes < LLS < 188 bytes, a sub-transport frame is generated so as to have the length of 188 bytes. In the case of 94 bytes < LLS < 141 bytes, a sub-transport frame is generated so as to have the length of 141 bytes. In the case of 47 bytes < LLS < 94 bytes, a sub-transport frame is generated so as to have the length of 94 bytes. In the case of LLS < 47 bytes, a sub-transport frame is generated so as to have the length of 47 bytes.

A sub-transport frame according to the current exemplary embodiment may have one of the four different frame modes as described above and may have one of two different types of operation modes distinguished according to whether the sub-transport frame includes stuffing data, i.e., a stuffing mode in which stuffing data is included and a non-stuffing mode in which no stuffing data is included.

In the stuffing mode, a sub-transport frame includes a segment of only one packetized frame, and if a remaining space exists, stuffing data fills up the remaining space. In the non-stuffing mode, a sub-transport frame includes segment(s) of at least one packetized frame. Thus, in the non-stuffing mode, if the last segment of one packetized frame is included in a sub-transport frame, not stuffing data but the first segment of a new packetized frame may be included in the remaining space of the sub-transport frame.

When a transport frame used to transmit the packetized frame is generated, the operation mode of a sub-transport frame is selected to optimize transmission of a packetized frame by minimizing stuffing overhead due to the amount of stuffing data and a header. The operation mode is predicted and selected for every sub-transport frame. For example, the operation mode of a sub-transport frame may be selected according to a characteristic of media contained in a packetized frame or a characteristic of a multiplexing system in which a packetized frame is transmitted.

A case where the operation mode is selected according to a characteristic of media will now be described. For temporally predictable time-constant media such as audio or video, it is pertinent to generate sub-transport frames in the non-stuffing mode. A sub-transport frame in the non-stuffing mode may include the last segment of a current packetized frame (n^{th} frame) and the first segment of a subsequent packetized frame ((n+1)^{th} frame). Thus, the sub-transport frame can be generated when the subsequent packetized frame is received.

However, for temporally non-predictable time-variable media such as images or text, if sub-transport frames in the non-stuffing mode are transmitted, input timing of a subsequent packetized frame ((n+1)^{th} frame) cannot be predicted, and thus a sub-transport frame of a current packetized frame (n^{th} frame) may not be transmitted due to non-completeness thereof. Thus, for time-variable media, it is efficient to generate and transmit sub-transport frames in the stuffing mode.

A case where the operation mode is selected according to a characteristic of a multiplexing system will now be described. For example, when an MPEG-2 TS is compared to a Real-time Transport Protocol (RTP), the MPEG-2 TS is transmitted with accurate time information, but the RTP has a delay due to an Internet network. Thus, the RTP has lower accuracy than the MPEG-2 TS. In the case of the MPEG-2 TS for which transmission must be performed by multiplexing data based on accurate time information, if the non-stuffing mode is used, the first segment of a packetized frame included in a sub-transport frame in the non-stuffing mode may not be delayed. Thus, in this case, it is efficient to use a sub-transport frame in the stuffing mode. In addition, the stuffing mode may have to be used for time-constant media, such as audio or video, according to a multiplexing characteristic.

In addition, the operation mode of a sub-transport frame may be set to the non-stuffing mode in a general case and changed to the stuffing mode in a particular case.

For example, if a sub-transport frame in the non-stuffing mode includes two packetized frames and is transmitted in an erroneous environment, even if an error occurs in the sub-transport frame, both of the two packetized frames are erroneous. Thus, in this case, the operation mode of a sub-transport frame is changed to the stuffing mode. In another example, when a sub-transport frame in the non-stuffing mode is transmitted, if it is determined that it is more appropriate to generate the sub-transport frame in the stuffing mode as a result obtained by predicting the length of the sub-transport frame and generating a header thereof, the operation mode may be changed to the stuffing mode.

FIG. 3 illustrates an aligned frame and a non-aligned frame of a sub-transport frame according to an exemplary embodiment of the present invention.

Referring to FIG. 3, a sub-transport frame has two types of frames, i.e., a non-aligned frame (NAF) and an aligned frame (AF). An AF is a frame in which a synchronization symbol of a sub-transport frame is included and includes a sync byte in a header field thereof. An NAF is a frame in which a synchronization symbol of a sub-transport frame is not included and does not include a sync byte in a header field thereof.

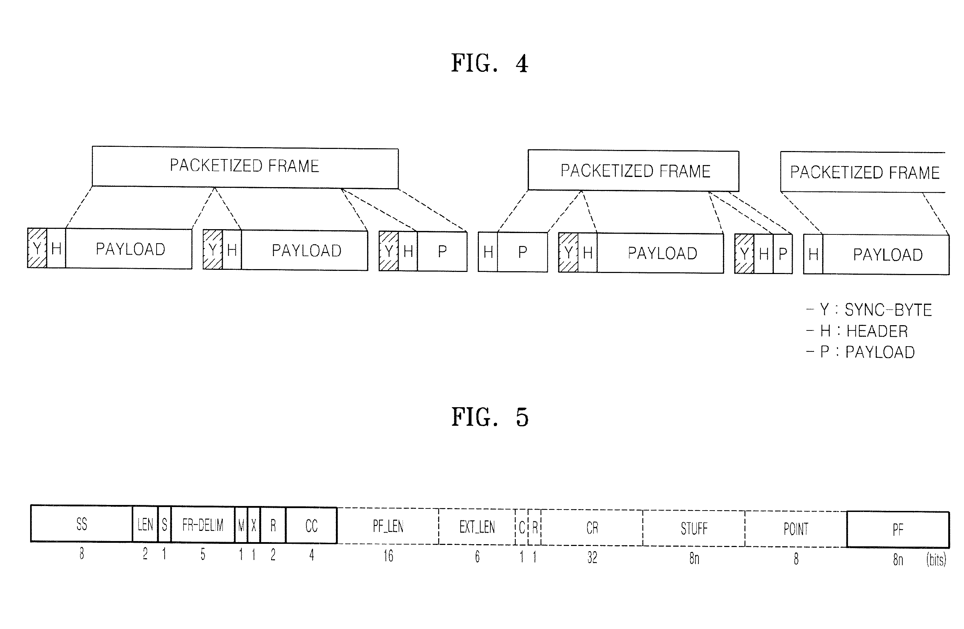

FIG. 4 illustrates a high-level structure of a sub-transport frame according to an exemplary embodiment of the present invention.

Referring to FIG. 4, a sub-transport frame according to an exemplary embodiment of the present invention is an AF including a sync byte, a header, and a payload or an NAF including a header and a payload. In FIG. 4, an upper-layer packet is a packetized frame, which may be an IP packet, an MPEG-4 Sync Layer (SL) packet, an audio frame, or a video frame.

FIG. 5 illustrates a header structure of a sub-transport frame according to an exemplary embodiment of the present invention.

Referring to FIG. 5, a synchronization symbol field SS is a fixed 8-bit field having a value of '0100 0111(0x47)' and has the same functionality as a synchronization symbol included in an MPEG-2 TS packet.

A frame length mode flag LEN is a 2-bit flag indicating the length of the sub-transport frame. Table 1 shows 4 values of the frame length mode flag LEN and the corresponding frame lengths.

**[Table 1]**

| LEN | Frame length |
|---|---|
| 0b00 | 0d47 |
| 0b01 | 0d94 |
| 0b10 | 0d141 |
| 0b11 | 0d188 |

A packetized frame start indicator flag S is a 1-bit flag having important meaning for a sub-transport frame delivering a packetized frame PF. A value '1' of the packetized frame start indicator flag S indicates that a payload of the sub-transport frame includes the first byte of a packetized frame PF, and a value '0' indicates that there are no first bytes of a packetized frame PF included in the sub-transport frame.

A frame delimiter field FR_DELIM is a 5-bit field indicating an identifier (ID) of data stored in the payload of the sub-transport frame, e.g., a packet ID (PID). An extension field mode flag M is a 1-bit flag indicating an operation mode of the sub-transport frame. A value '1' of the extension field mode flag M indicates the non-stuffing mode, and a value '0' indicates the stuffing mode.

An extension flag X is a 1-bit flag indicating the existence of an extension field. A value '1' of the extension flag X indicates that the extension field exists, and a value '0' indicates that no extension field exists. The extension field includes an extension field length field EXT_LEN, a clock reference flag C, a reserved field R, a clock reference field CR, and stuffing data STUFF.

A reserved field R is a 2-bit field reserved for future use.

A continuity counter field CC is a 4-bit field having a value increasing for each sub-transport frame having the same frame delimiter field FR_DELIM. A value of the continuity counter field CC returns to 0 after the maximum value.

A packetized frame length field PF_LEN is a 16-bit field indicating the length of the packetized frame PF. The packetized frame length field PF_LEN exists only if the packetized frame start indicator flag S is set to '1'.

The extension field length field EXT_LEN is a 6-bit field indicating the length of the extension field.

The clock reference flag C is a 1-bit flag indicating the existence of the clock reference field CR. A value '1' of the clock reference flag C indicates that the clock reference field CR exists, and a value '0' indicates that the clock reference field CR does not exist.

The reserved field R in the extension field is a 1-bit field reserved for future use.

The clock reference field CR is a 32-bit field indicating a clock reference.

The stuffing data STUFF is filled with an 8-bit value such as '11111111', which can be inserted by an encoder and removed by a decoder.

A pointer field POINT is an 8-bit field indicating the number of bytes following the pointer field POINT up to the first byte of a subsequent packetized frame. Thus, a value '0x00' of the pointer field POINT indicates that a packetized frame starts immediately after the pointer field POINT. If at least one packetized frame starts in a given transport frame, the packetized frame start indicator flag S is set to 1, and the first byte of a payload of the transport frame includes the pointer field POINT.

A sub-transport frame in the stuffing mode uses the extension field, and if the last segment of a packetized frame is included in the sub-transport frame, the sub-transport frame is completely constituted. In the stuffing mode, the pointer field POINT is not used.

If the last segment of a packetized frame is included in a sub-transport frame in the non-stuffing mode, the sub-transport frame represents the start point of a subsequent packetized frame using the pointer field POINT. In the non-stuffing mode, the extension field is not used.

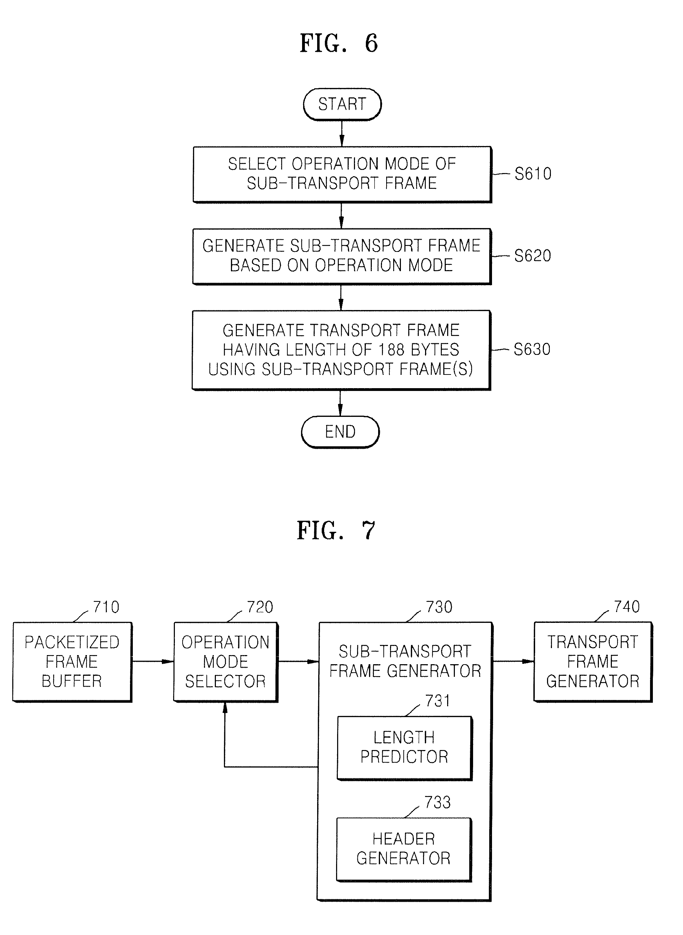

FIG. 6 is a flowchart illustrating a method of generating a transport frame according to an exemplary embodiment of the present invention.

Referring to FIG. 6, an operation mode of a sub-transport frame, which is a transmission unit of an input packetized frame, is selected in operation S610. The operation mode is distinguished according to whether stuffing data is included in the sub-transport frame. The operation mode that is selected is an optimized mode in which the packetized frame is efficiently transmitted by minimizing stuffing overhead when the packetized frame is transmitted. For example, the operation mode is selected according to a characteristic of media included in the packetized frame or a characteristic of a multiplexing system in which the packetized frame is transmitted.

Each sub-transport frame is generated based on the operation mode in operation S620. Each sub-transport frame may have a length of 47 bytes, 94 bytes, 141 bytes, or 188 bytes, depending on the length of the packetized frame.

Each sub-transport frame is generated by predicting the length of the packetized frame, selecting the length of a sub-transport frame based on the predicted length of the packetized frame, and forming a header according to the selected operation mode.

If the operation mode that is selected is the non-stuffing mode, stuffing data is not included in a sub-transport frame in the non-stuffing mode. If the last segment of the packetized frame is included in a sub-transport frame in the non-stuffing mode, the first segment of a new packetized frame is added to the sub-transport frame. In this case, a pointer field POINT is set in the sub-transport frame in order to indicate that the new packetized frame follows the pointer field POINT.

A transport frame is generated using the sub-transport frame(s) in operation S630. A transport frame having the same length, i.e., 188 bytes, as an MPEG-2 TS packet is generated by adding a sync byte thereto.

FIG. 7 is a block diagram of an apparatus for generating a transport frame according to an exemplary embodiment of the present invention.

Referring to FIG. 7, the apparatus includes a packetized frame buffer 710, an operation mode selector 720, a sub-transport frame generator 730, and a transport frame generator 740.

The packetized frame buffer 710 receives and stores packetized frames generated by packetizing data such as audio, video, or IP packets.

The operation mode selector 720 selects an operation mode of a sub-transport frame suitable for transmitting each of the packetized frames. The operation mode is predicted and selected for each sub-transport frame. The operation mode is distinguished according to whether stuffing data is included in each sub-transport frame. The operation mode is selected to efficiently transmit each packetized frame by minimizing stuffing overhead. The operation mode can be selected according to a characteristic of media included in the packetized frame or a characteristic of a multiplexing system for multiplexing the packetized frame.

The sub-transport frame generator 730 generates a sub-transport frame based on the selected operation mode. The sub-transport frame generator 730 includes a length predictor 731 and a header generator 733.

The length predictor 731 predicts the length of the sub-transport frame to be generated, according to the length of a packetized frame. That is, the length of the sub-transport frame is selected from among lengths of 47 bytes, 94 bytes, 141 bytes, and 188 bytes, depending on the length of a packetized frame.

The header generator 733 forms a header based on the predicted length and the operation mode. The header of the sub-transport frame can be constituted as illustrated in FIG. 5.

If the operation mode that is selected is the non-stuffing mode, the sub-transport frame generator 730 generates a sub-transport frame by adding the first segment of a new packetized frame immediately after the last segment of a current packetized frame without stuffing data. In the non-stuffing mode, the header generator 733 represents that the new packetized frame begins immediately after a pointer field POINT by setting the pointer field POINT in the sub-transport frame.

The sub-transport frame generator 730 determines whether the generated sub-transport frame is optimized to transmit the packetized frame(s). When the sub-transport frame generator 730 determines that it is appropriate to generate a sub-transport frame in another operation mode instead of the selected operation mode, the sub-transport frame generator 730 outputs a control signal to the operation mode selector 720 to select another operation mode. For example, based on information on that a transport frame must be transmitted in an erroneous environment, even if generation of a sub-transport frame in the non-stuffing mode is in progress, the sub-transport frame generator 730 can control the operation mode selector 720 to select the stuffing mode so that a transport frame in the stuffing mode is generated.

The transport frame generator 740 receives sub-transport frames and generates a transport frame using the received sub-transport frames. The transport frame generator 740 inserts a synchronization symbol into each transport frame after checking synchronization in every length of the transport frame the same as the length of an MPEG-2 TS packet, i.e., 188 bytes.

A transport stream formed with the transport frames that have been processed with respect to synchronization symbols is buffered and transmitted. The generated transport stream is multiplexed according to a transmission path, such as a broadcasting network, a satellite network, or an Internet network, and transmitted to a receiver end.

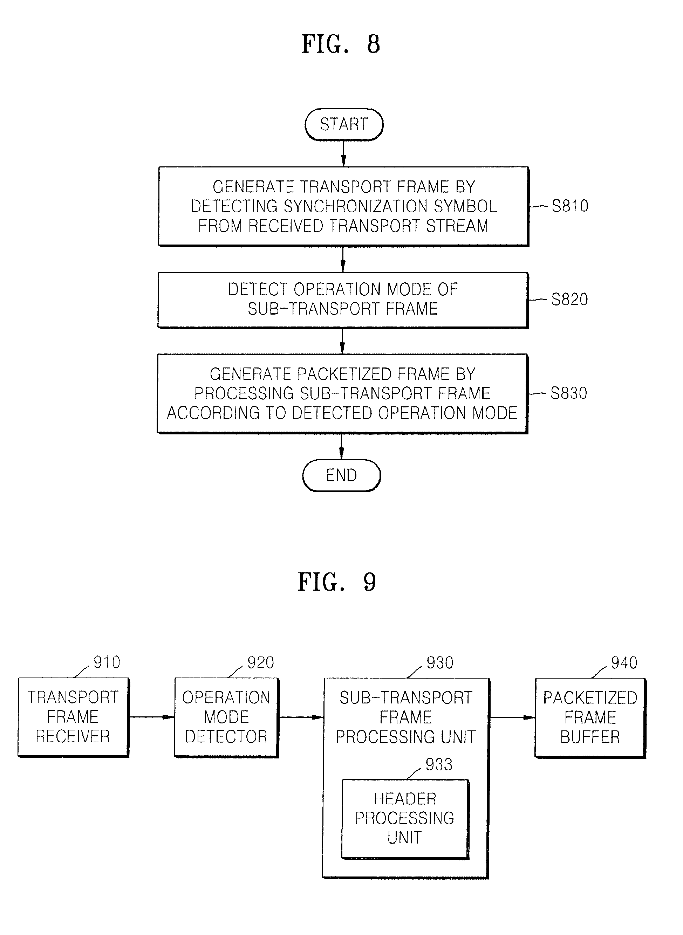

FIG. 8 is a flowchart illustrating a method of processing a transport frame according to an exemplary embodiment of the present invention.

Referring to FIG. 8, transport frames are generated from a received transport stream in operation S810. In this case, each transport frame is generated by detecting a synchronization symbol in the transport stream.

An operation mode of each sub-transport frame included in a transport frame is detected in operation S820. According to an exemplary embodiment of the present invention, the operation mode can be detected using an extension mode field M of each sub-transport frame.

A packetized frame is generated by processing each sub-transport frame according to the detected operation mode in operation S830. Information on a configuration of each sub-transport frame can be determined by analyzing a header of each sub-transport frame, and a packetized frame can be generated by processing each sub-transport frame based on the information. When the packetized frame is generated by processing each sub-transport frame in operation S830, the length of each sub-transport frame is detected as 47 bytes, 94 bytes, 141 bytes, or 188 bytes.

If the detected operation mode is the non-stuffing mode, a pointer field POINT is detected in a sub-transport frame, and in this case, a new packetized frame coming subsequent to the pointer field POINT is processed.

In addition, the method according to the current exemplary embodiment may further include determining by checking a continuity counter field CC of a sub-transport frame whether an error has occurred in the sub-transport frame. If it is determined that an error has occurred in the sub-transport frame, a buffer storing packetized frames having the same frame delimiter field FR_DELIM as that of the sub-transport frame can be initialized.

FIG. 9 is a block diagram of an apparatus for processing a transport frame according to an exemplary embodiment of the present invention.

Referring to FIG. 9, the apparatus includes a transport frame receiver 910, an operation mode detector 920, a sub-transport frame processing unit 930, and a packetized frame buffer 940.

The transport frame receiver 910 stores a received transport stream and generates transport frames from the transport stream. Each of the transport frames can be generated by detecting a synchronization symbol in the transport stream.

The operation mode detector 920 determines a processing method of each sub-transport frame included in a transport frame by detecting an operation mode of the sub-transport frame.

The sub-transport frame processing unit 930 processes a sub-transport frame according to the detected operation mode of the sub-transport frame. The sub-transport frame processing unit 930 includes a header processing unit 933 to perform this process.

The header processing unit 933 processes a sub-transport frame header. As a result of the processing by the header processing unit 933, the length of each sub-transport frame and information on a configuration of the sub-transport frame can be ascertained. The length of each sub-transport frame is detected as 47 bytes, 94 bytes, 141 bytes, or 188 bytes.

If a pointer field POINT is detected by the header processing unit 933, the sub-transport frame processing unit 930 processes a new packetized frame coming subsequent to the pointer field POINT. The sub-transport frame processing unit 930 determines whether one of a plurality of sub-transport frames having the same value in their frame delimiter fields FR_DELIM has been damaged.

The packetized frame buffer 940 stores a packetized frame, such as an audio frame, a video frame, or an IP packet, generated from each sub-transport frame. The packetized frame buffer 940 can be configured to have a buffer space to store a packetized frame every time a frame delimiter field FR_DELIM is detected. If information indicating that a sub-transport frame has been damaged is received from the sub-transport frame processing unit 930, the packetized frame buffer 940 can initialize a buffer space in which a packetized frame having the same frame delimiter field FR_DELIM as that of the damaged sub-transport frame was stored.

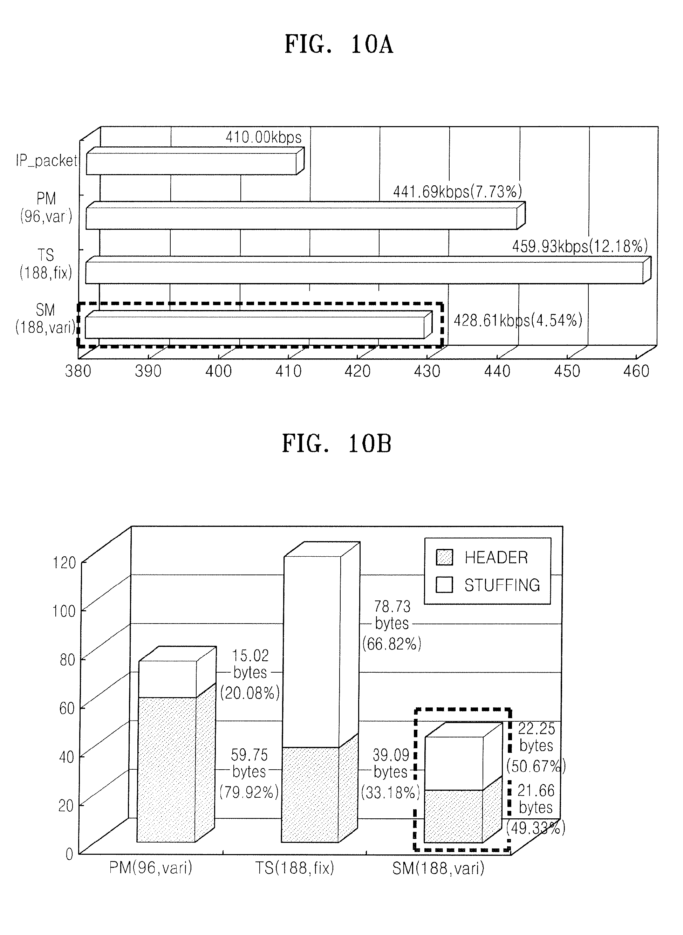

FIGS. 10A and 10B are graphs showing that stuffing overhead is reduced when an IP packet is transmitted using a transport frame according to an exemplary embodiment of the present invention.

In FIG. 10A, IP_packet indicates a case where a packetized frame obtained by packetizing video data into an IP packet is transmitted. PM (96, vari) indicates a case where an IP packet in a packet mode of a Digital Audio Broadcasting (DAB) system, which has a variable length of 96, 72, 48, or 24 bytes, is transmitted. TS (188, fix) indicates a case where an IP packet in the form of a 188-byte MPEG-2 TS packet is transmitted. SM (188, vari) indicates a case where an IP packet is transmitted using a transport frame in the stuffing mode, which has a variable length of 188, 141, 94, or 47 bytes according to the length of the last segment of a packetized frame.

While an IP packet is transmitted at 410.00 Kbps, the IP packet is transmitted at 441.69 Kbps in the packet mode of a DAB system, and thus stuffing overhead of 7.73% is generated compared to the original size of the IP packet. If the IP packet is transmitted using an MPEG-2 TS packet having the fixed length of 188 bytes, stuffing overhead of 12.18% is generated. If the IP packet is transmitted in a variable length mode of the stuffing mode, stuffing overhead of 4.54% is generated.

FIG. 10B shows a graph considering only an increased data portion from FIG. 10A. In the bar graph, in which each bar is divided into two portions, the lower portion indicates an increase in the amount of data due to the addition of a header, and the upper portion indicates an increase in the amount of data due to stuffing data. Referring to FIGS. 10A and 10B, if IP packet data is transmitted in the variable length mode of the stuffing mode according to an exemplary embodiment of the present invention, an increase of the amount of data of a header and stuffing data is the lowest compared to the packet mode of a DAB system or a case where an MPEG-2 TS packet has the fixed length of 188 bytes.

The invention can also be embodied as computer readable codes on a computer readable recording medium. Also, functional programs, codes, and code segments for accomplishing the exemplary embodiments of the present invention can be easily construed by programmers skilled in the art to which the present invention pertains. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

As described above, according to exemplary embodiments of the present invention, by generating a transport frame using sub-transport frame(s) having a variable length, overhead bits due to stuffing data and header data can be reduced. In addition, a packetized frame can be efficiently transmitted using sub-transport frames having an operation mode which is a stuffing mode or a non-stuffing mode.

In addition, since the total length of a transport frame is fixed to 188 bytes, an error correction method which can be applied to an MPEG-2 TS packet can be applied.

Thus, a transport frame used to more efficiently transmit various types of data than an MPEG-2 TS packet can be provided.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating a transport frame used to transmit a packetized frame, the method comprising:
selecting (S610) an operation mode;
generating (S620) a sub-transport frame based on the operation mode, the sub-transport frame being a transmission unit of an input packetized frame; and
generating (S630) a transport frame using the sub-transport frame, wherein the operation mode indicates whether the sub-transport frame includes stuffing data.

2. The method of claim 1, wherein the sub-transport frame comprises a header containing information on a configuration of the sub-transport frame and a payload containing the packetized frame.

3. The method of claim 1 or 2, wherein the operation mode is selected to efficiently transmit the packetized frame by minimizing stuffing overhead.

4. The method of any of claims 1-3, wherein a new operation mode is predicted if a new sub-transport frame is generated.

5. The method of any preceding claim, wherein the sub-transport frame has a length of 47 bytes, 94 bytes, 141 bytes, or 188 bytes, depending on a length of the packetized frame.

6. The method of claim 5, wherein the length of the packetized frame is a length of a last segment of the packetized frame.

7. The method of any preceding claim, further comprising, if the operation mode is a non-stuffing mode in which no stuffing data is included, generating the sub-transport frame by adding a first segment of a new packetized frame to a last segment of a current packetized frame.

8. The method of any preceding claim, further comprising, if the operation mode is a non-stuffing mode in which no stuffing data is included, indicating that a new packetized frame starts immediately after a pointer field by setting the pointer field in the sub-transport frame.

9. The method of any preceding claim, further comprising:
determining whether the sub-transport frame is optimized to transmit the packetized frame to generate a determination result; and
changing the operation mode of the sub-transport frame according to the determination result.

10. The method of claim 9, wherein the operation mode is changed between a stuffing mode and a non-stuffing mode, wherein the stuffing mode is a mode in which stuffing data is included in the sub-transport frame and a non-stuffing mode in which no stuffing data is included in the sub-transport frame.

11. The method of any preceding claim, wherein the generating of the transport frame using the sub-transport frame comprises generating the transport frame having the same length as an MPEG-2 transport stream (TS) packet by adding a sync byte.

12. The method of any preceding claim, wherein the operation mode of the sub-transport frame is selected according to at least one of a characteristic of media contained in the packetized frame and a characteristic of a multiplexing system in which the packetized frame is transmitted.

13. The method of any preceding claim, wherein the generating of the sub-transport frame comprises:
predicting a length of the packetized frame;
selecting a length of the sub-transport frame based on the predicted length of the packetized frame; and
forming a header according to the operation mode

14. An apparatus for generating a transport frame used to transmit a packetized frame, the apparatus comprising:
an operation mode selector (720) which selects an operation mode;
a sub-transport frame generator (730) which generates a sub-transport frame based on the operation mode, the sub-transport frame being a transmission unit of an input packetized frame; and
a transport frame generator (740) which generates a transport frame using the sub-transport frame,
wherein the operation mode indicates to whether the sub-transport frame includes stuffing data.

15. The apparatus of claim 14, wherein the sub-transport frame comprises a header containing information on a configuration of the sub-transport frame and a payload containing the packetized frame.

16. The apparatus of claim 14 or 15, wherein the operation mode is selected to efficiently transmit the packetized frame by minimizing stuffing overhead.

17. The apparatus of any of claims 14-16, wherein a new operation mode is predicted if a new sub-transport frame is generated.

18. The apparatus of any of claims 14-17, wherein the sub-transport frame has a length of 47 bytes, 94 bytes, 141 bytes, or 188 bytes, depending on a length of the packetized frame.

19. The apparatus of any of claims 14-18, wherein the length of the packetized frame is a length of a last segment of the packetized frame.

20. The apparatus of any of claims 14-19, wherein if the operation mode is a non-stuffing mode in which no stuffing data is included, the sub-transport frame generator generates the sub-transport frame by adding a first segment of a new packetized frame to a last segment of a current packetized frame.

21. The apparatus of any of claims 14-20, wherein if the operation mode is a non-stuffing mode in which no stuffing data is included, the sub-transport frame generator indicates that a new packetized frame starts immediately after a pointer field by setting the pointer field in the sub-transport frame.

22. The apparatus of any of claims 14-21, wherein the sub-transport frame generator (730) determines whether the sub-transport frame is optimized to transmit the packetized frame to generate a determination result, and changes the operation mode of the sub-transport frame according to the determination result.

23. The apparatus of claim 22, wherein the operation mode is changed between a stuffing mode and a non-stuffing mode, wherein the stuffing mode is a mode in which stuffing data is included in the sub-transport frame and a non-stuffing mode in which no stuffing data is included in the sub-transport frame.

24. The apparatus of any of claims 14-23, wherein the transport frame generator generates the transport frame having the same length as an MPEG-2 transport stream (TS) packet by adding a sync byte.

25. The apparatus of any of claims 14-24, wherein the operation mode of the sub-transport frame is selected according to at least one of a characteristic of media contained in the packetized frame and a characteristic of a multiplexing system in which the packetized frame is transmitted.

26. The apparatus of any of claims 14-25, wherein the sub-transport frame generator is configured to predict a length of the packetized frame, select a length of the sub-transport frame based on the predicted length of the packetized frame; and form a header according to the operation mode.

27. A method of processing a transport frame, the method comprising:
generating (S810) a transport frame from a received transport stream;
detecting (S820) an operation mode of a sub-transport frame included in the transport frame; and
generating (S830) a packetized frame by processing the sub-transport frame included in the transport frame according to the operation mode.

28. The method of claim 27, wherein the generating of the transport frame from the received transport stream comprises detecting a synchronization symbol.

29. The method of claim 27 or 28, wherein a length of the sub-transport frame is 47 bytes, 94 bytes, 141 bytes, or 188 bytes.

30. The method of any of claims 27-29, wherein the generating of the packetized frame by processing the sub-transport frame comprises processing a new packetized frame coming subsequent to a pointer field if the pointer field is detected in the sub-transport frame.

31. The method of any of claims 27-30, further comprising:
determining whether the sub-transport frame is damaged; and
if it is determined that the sub-transport frame is damaged, a buffer which stores the packetized frame is initialized.

32. The method of any of claims 27-31, wherein the detecting of the operation mode of the sub-transport frame is performed by determining information on a configuration of the sub-transport frame by analyzing a header of the sub-transport frame; and
wherein the processing of the sub-transport frame is performed using the determined information on the configuration of the sub-transport frame.

33. An apparatus for processing a transport frame, the apparatus comprising:
a transport frame receiver (910) which generates a transport frame from a received transport stream;
an operation mode detector (920) which detects an operation mode of a sub-transport frame included in the transport frame; and
a sub-transport frame processing unit (930) which generates a packetized frame by processing the sub-transport frame included in the transport frame according to the operation mode.

34. The apparatus of claim 33, wherein the transport frame receiver detects a synchronization symbol in the transport stream.

35. The apparatus of any of claim 33-34, wherein a length of the sub-transport frame is 47 bytes, 94 bytes, 141 bytes, or 188 bytes.

36. The apparatus of any of claims 33-35, wherein the sub-transport frame processing unit processes a new packetized frame following a pointer field if the pointer field is detected in the sub-transport frame.

37. The apparatus of any of claims 33-36, further comprising a packetized frame buffer which stores the packetized frame, wherein the sub-transport frame processing unit further determines whether the sub-transport frame is damaged, and if it is determined that the sub-transport frame is damaged, a buffer space in the packetized frame buffer is initialized.

38. The apparatus of any of claims 33-37, wherein the operation mode detector detects the operation mode of the sub-transport frame by determining information on a configuration of the sub-transport frame by analyzing a header of the sub-transport frame; and
wherein the sub-transport frame processing unit processes the sub-transport frame using the determined information on the configuration of the sub-transport frame to generate the packetized frame.

39. A computer readable recording medium which stores a computer readable program for executing a method of generating a transport frame used to transmit a packetized frame, the method comprising:
selecting an operation mode, the sub-transport frame being a transmission unit of an input packetized frame;
generating a sub-transport frame based on the operation mode; and
generating a transport frame using the sub-transport frame, wherein the operation mode is set according to whether the sub-transport frame includes stuffing data.

40. A computer readable recording medium which stores a computer readable program for executing a method of processing a transport frame, the method comprising:
generating a transport frame from a received transport stream;
detecting an operation mode of a sub-transport frame included in the transport frame; and
generating a packetized frame by processing the sub-transport frame included in the transport frame according to the operation mode.
